(19) Europäisches Patentamt
European Patent Office
Office européen des brevets

(11) **EP 1 342 678 B1**

(12) **EUROPÄISCHE PATENTSCHRIFT**

(45) Veröffentlichungstag und Bekanntmachung des Hinweises auf die Patenterteilung:
**06.04.2005 Patentblatt 2005/14**

(51) Int Cl.$^7$: **B65G 47/84**, B67C 7/00

(21) Anmeldenummer: **03000603.5**

(22) Anmeldetag: **14.01.2003**

(54) **Transportstern für Gefässe**

Star conveyor for receptacles

Système de transport en étoile pour récipients

(84) Benannte Vertragsstaaten:
**AT BE BG CH CY CZ DE DK EE ES FI FR GB GR HU IE IT LI LU MC NL PT SE SI SK TR**

(30) Priorität: **08.03.2002 DE 20203781 U**

(43) Veröffentlichungstag der Anmeldung:
**10.09.2003 Patentblatt 2003/37**

(73) Patentinhaber: **Filling Systems s.r.l.**
**41100 Modena (IT)**

(72) Erfinder: **Venturi, Paolo**
**40139 Bologna (IT)**

(74) Vertreter: **Grünecker, Kinkeldey, Stockmair & Schwanhäusser Anwaltssozietät Maximilianstrasse 58 80538 München (DE)**

(56) Entgegenhaltungen:
**EP-A- 1 050 508**

**Beschreibung**

Die vorliegende Erfindung bezieht sich auf einen Transportstern für Gefäße gemäß dem Oberbegriff des Anspruchs 1.

In einer Anlage zum Befüllen von Gefäßen mit einer Flüssigkeit, beispielsweise mit Wasser, Öl, alkoholischen oder Erfrischungsgetränken etc., werden die leeren und nicht verschlossenen Gefäße im Allgemeinen zunächst von einem Förderer ergriffen, anschließend gewaschen, befüllt, verschlossen und, ggf. verpackt, ausgegeben.

Beim Waschen werden die Gefäße entlang eines sogenannten Wasch-Karussells" befördert, welches sich mit konstanter Rotationsgeschwindigkeit um seine Achse dreht, oder entlang einer linearen Waschvorrichtung. Damit die Gefäße bei der Aufnahme auf das Wasch-Karussell nicht beschleunigt werden müssen und sich dabei im ungünstigsten Fall sogar verkanten können, bringt man sie mittels eines rotierenden Transfer-Karussells oder Transportsterns auf die benötigte Geschwindigkeit, so dass das Wasch-Karussell bei der Übernahme der Flaschen vom Transportstern keine beschleunigenden Kräfte mehr ausüben muss. Im Übergabepunkt liegen dazu die Tangenten der Bewegungsbahnen der Flaschen entlang der beiden Vorrichtungen im Wesentlichen übereinander. Auch zwischen zwei anderen Komponenten einer solchen Anlage zur Behandlung von Gefäßen können Transportsterne eingesetzt werden.

Solche Transportsterne sind aus der Praxis bekannt. Eine Schwierigkeit ergibt sich jedoch dann, wenn die Befüllanlage für Gefäße unterschiedlicher Form und Größe verwendet werden soll. In herkömmlichen Transportsternen ist nur ein Betrieb mit einer einzigen Flaschenform möglich. Elastische Gefäße anderer Form, wie insbesondere Kunststoffflaschen aus PET (Polyethylen-terephthalat), werden von den starren Griffen bekannter Transportsterne zerdrückt, während feste Gefäße, z.B. Glasflaschen, von den Griffen nicht gefasst werden.

Andere Transportsterne erlauben zwar den Betrieb mit unterschiedlichen Formen der Gefäße, jedoch nur nach einem aufwändigen und mit Stillstand der Anlage verbundenen Umrüsten, und nie mit mehr als einer Behälterform gleichzeitig.

In einem bekannten Transportstern weist jeder Greifarm einen Gegenarm auf, an dem eine Steuerfläche vorgesehen ist. Ein Steuerdaumen greift an diesen Steuerflächen an und bewirkt das Öffnen oder Schließen des Griffes. Da die Steuerflächen asymmetrisch geformt sind, ist auch die Bewegung der beiden Greifarme unterschiedlich. Nachteilig an diesem Transportstern ist jedoch, dass es in seiner Schließstellung einen bestimmten Öffnungswinkel gibt, der nicht unterschritten werden kann. Würde er unterschritten, so könnte der Steuerdaumen nicht länger an den Steuerflächen der Greifarme angreifen. Aus diesem Grund können nur Gefäße transportiert werden, deren Größe einen Mindestdurchmesser nicht unterschreitet. Sobald ihr Durchmesser jedoch größer als dieser Mindestdurchmesser wird, steigt die Belastung der Greifarme stark an.

Dokument EP-A- 1 050 508 offenbart ein Transportstern für Gefäße, mit zwei relativ zweinander und unabhängig voneinander beweglichen Griffarmen, wobei ferner der eine Griffarm ein Führungsarm und der andere ein Folgearm ist.

Ein besondere Problematik entsteht meist an der Übergabeposition zwischen dem Transportstern und der nachfolgenden Vorrichtung, beispielsweise einem Wasch-Karussell. Das Ergreifen der Gefäße vom Wasch-Karussell aus muss exakt in dem Moment erfolgen, zu dem der Griff vom Transportstern aus gelöst wird. Wird der Griff zu früh gelöst, so fällt das Gefäß aus dem Förderweg hinaus. Wird er zu spät gelöst und das Gefäß zeitweilig von beiden Vorrichtungen aus erfasst, so ist seine Bewegung nicht eindeutig festgelegt und es kann sich verkanten. Diese Problematik verschärft sich, wenn Gefäße unterschiedlicher Formen und Größen transportiert werden, da dann eine Synchronisierung der Griffe kaum noch möglich ist.

Die Aufgabe der vorliegenden Erfindung ist es daher, einen Transportstern zur Verfügung zu stellen, mit dem ohne ein Umrüsten Gefäße verschiedener Formen gleichzeitig befördert werden können, und der bei möglichst einfacher Konstruktion die geschilderte Übergabeproblematik löst.

Diese Aufgabe wird erfindungsgemäß durch einen Transportstern für Gefäße mit den Merkmalen des Anspruchs 1 gelöst.

Die Unabhängigkeit der Bewegungen der beiden Griffarme bietet den Vorteil, dass die Griffarme im Betrieb des Transportsterns zwar zum Greifen der Gefäße zusammenwirken, dabei jedoch unterschiedliche Funktionen erfüllen. Der eine Griffarm ist dabei erfindungsgemäß ein Führungsarm, der maßgeblich die Bewegung des gefassten Gefäßes entlang des Transportsterns vorgibt. Der andere Arm ist ein Folgearm, dessen vornehmliche Aufgabe es ist, das Gefäß zu halten bzw. zum geeigneten Zeitpunkt freizugeben. Eine Freigabe-Bewegung des Führungsarms kann dann gleichsam passiv erfolgen, sobald das Gefäß an eine nachfolgende Vorrichtung übergeben ist.

Indem am Ort des erfassten Gefäßes die tangentiale Vorspannung des Führungsarms größer als die des Folgearms ist, bietet der Führungsarm eine vergleichsweise feste Anlage, gegen die das Gefäß durch die vom vorderen Griffarm ausgeübte Kraft gehalten wird.

Dabei ist vorzugsweise der nachlaufende Griffarm der Führungsarm und der vorlaufende Griffarm der Folgearm, damit die das Gefäß von hinten antreibende Kraft groß wird.

Bei der vorliegenden Erfindung ist die Position des Gefäßes in der Schließstellung günstigerweise durch den Führungsarm festgelegt. Eine definierte Position des Gefäßes erleichtert die Synchronisierung des Transportsterns mit einer nachfolgenden Vorrichtung.

Vorzugsweise bewegt sich der Folgearm sich bei der Schließbewegung so weit auf den Führungsarm zu, bis er das zu ergreifende Gefäß beaufschlagt. Damit entfällt die Festlegung auf einen bestimmten Gefäßdurchmesser. Statt dessen ist die Schließstellung des Griffes immer an den jeweiligen Gefäßdurchmesser angepasst, ohne dass sich die auf die Gefäße ausgeübten Kräfte nennenswert unterschieden.

Bevorzugt ist mindestens ein Anschlag vorgesehen, der den Auslenkwinkel des Führungsarms begrenzt. Damit wird die Schließposition des Führungsarms festgelegt und es wird verhindert, dass der Führungsarm wegen seiner höheren tangentialen Vorspannung das Gefäß gegen die Kraft des Folgearms verschiebt. Der Anschlag kann ein senkrecht auf der Rotorscheibe montierter Stab oder Block sein. Die Schließposition des Führungsarms kann so definiert sein, dass er in ihr im Wesentlichen radial von der Rotorscheibe absteht.

Die Vorspannung des Führungsarms ist vorteilhafterweise mindestens so stark, dass der Führungsarm ein in einer Abholposition ruhendes Gefäß mitführt. Insbesondere muss die Vorspannung hoch genug sein, dass der Führungsarm das Gefäß entgegen dessen Trägheit auf die Rotationsgeschwindigkeit beschleunigen kann.

Erfindungsgemäß ist die Vorspannung des Führungsarms schwächer als die von einer nachfolgenden Vorrichtung zum Ergreifen des Gefäßes ausgeübte Kraft. Sobald das Gefäß von der nachfolgenden Vorrichtung ergriffen ist, gibt diese die neue Bewegungsbahn des Gefäßes vor. Daher ist es vorteilhaft, wenn der Führungsarm des Transportsterns passiv öffnet, um einerseits das Gefäß möglichst lange zu führen und andererseits dessen neue Bewegungsbahn nicht zu beeinflussen.

Vorzugsweise verschwenkt mindestens ein Griffarm gemeinsam mit einem Hebelarm, und ein Ende einer Zugfeder ist mit dem Hebelarm verbunden. Durch die Federkonstante, die Länge des Hebelarms und die Länge des Griffarms können dann die gewünschten Tangentialkräfte eingestellt werden. Zudem erleichtert ein Hebelarm das günstige Anordnen der Zugfeder an der Rotorscheibe, da die Feder nicht mehr unmittelbar am Griffarm selbst angebracht werden muss.

Günstig ist ferner, wenn der zum Führungsarm gehörende Hebelarm und die Zugfeder auf einer anderen Seite der Rotorscheibe angeordnet sind als der zum Folgearm gehörende Hebelarm und die Zugfeder, da sich die Zugfedern so gegenseitig in ihrer Bewegung nicht behindern können.

In einer bevorzugten Ausführungsform der Erfindung weist der Transportstern eine ortsfeste Kurvensteuerung auf, die die Bewegung eines Griffarmes bestimmt. Insbesondere kann die Kurvensteuerung die Positionen festlegen, an denen jeder Griff öffnet oder schließt.

Die beiden Griffarme können an ihrem äußeren Ende Aussparungen aufweisen, in denen der Hals eines Gefäßes und/oder ein anderer Abschnitt eines Gefäßes greifbar ist. Damit wird das Gefäß am Verkippen gehindert, was später seine Übernahme durch z.B. eine Waschvorrichtung entscheidend verbessert.

Vorteilhafterweise sind mehrere Griffe äquidistant an der Rotorscheibe angeordnet. So werden bei konstanter Rotationsgeschwindigkeit in regelmäßigen Zeitabständen Gefäße aufgenommen und abgegeben.

In einer Variante der Erfindung ist die Rotationsgeschwindigkeit der Rotorscheibe über deren Antrieb stufenlos einstellbar, damit insbesondere die Tangentialgeschwindigkeit im Übergabepunkt an die Tangentialgeschwindigkeit der nachfolgenden Vorrichtung angepasst werden kann. Stimmen die Tangentialgeschwindigkeiten dort überein, so muss das Gefäße am Übergabepunkt nicht beschleunigt oder abgebremst werden.

In einer anderen Variante ist der Antrieb der Rotorscheibe mit dem Antrieb einer dem Transportstern nachgeordneten Förder- oder Bearbeitungseinrichtung für die Gefäße koordinierbar, um die Tangentialgeschwindigkeiten aneinander anzupassen. Eine feste Kopplung der Antriebe hat den Vorteil, dass über sie die Vorrichtungen nicht nur in ihren Geschwindigkeiten, sondern auch in ihren "Phasen" gekoppelt werden können. Mit "Phasenkopplung" ist gemeint, dass der Transportstern genau zu dem Zeitpunkt ein Gefäß am Übergabepunkt anliefert, zu dem auch eine entsprechende Gefäß-Aufnahme an der nachfolgenden Vorrichtung den Übergabepunkt erreicht.

Vorteilhafterweise steht der nachlaufende Griffarm weiter über den Rand der Rotorscheibe vor als der vorlaufende Griffarm, um in der Abholposition ein Gefäß besser erfassen zu können.

Bevorzugt liegt der vorlaufende Griffarm in der vollständig geöffneten Stellung des Griffes am in Rotationsrichtung vorangehenden Griff an, d.h. an dessen Rückseite. So wird verhindert, dass zwischen einem nachlaufenden Griffarm, der soeben einen Behälter erfasst hat, und dem nachfolgenden Griff eine Lücke entsteht, in die das nächste Gefäß gerät und in der es nicht gegriffen und transportiert werden kann. Im ungünstigsten Fall könnte dies sonst zu einer Blockade des Transportsterns führen.

Günstigerweise weist der Folgearm an einem in Abhängigkeit von der Kurvensteuerung bewegbaren Hebelarm ein Laufrad auf, welches aufgrund der von der Zugfeder erzeugten Vorspannung an der Kurvensteuerung anliegt. Das Laufrad vermindert die an der Kurvensteuerung entstehende Reibung. Die Vorspannung durch die Zugfeder sorgt dafür, dass das Laufrad ohne Spiel an der Kurvensteuerung geführt wird und die Positionen des Öffnens uns Schließens damit genau definierbar werden.

Die Kurvensteuerung kann so geformt sein, dass sie zwei kreissegmentförmige Abschnitte mit jeweils der Rotorachse als Mittelpunkt aufweist, wobei der eine Abschnitt einem kleineren Kreisradius entspricht als der andere, und wobei zwischen den beiden Abschnitten jeweils Übergangsbereiche liegen. Die kreissegmentförmigen Abschnitte legen durch ihre unterschiedlichen Radien fest, in welchem Bereich die Griffe geschlossen sind und in welchem sie geöffnet sind. Die Übergangsbereiche sorgen dafür, dass das Öffnen und Schließen sanft erfolgt.

Im Folgenden wird ein bevorzugtes Ausführungsbeispiel der Erfindung anhand einer Zeichnung dargestellt. Es zeigen:

Fig. 1 eine Draufsicht auf ein Ausführungsbeispiel eines erfindungsgemäßen Transportsterns für Gefäße, bei dem der Übersichtlichkeit halber lediglich ein Griff an der Abholposition und einer nahe der Übergabeposition gezeigt sind,

Fig. 2 eine Draufsicht auf einen Griff des in Fig. 1 gezeigten Transportsterns,

Fig. 3 eine Draufsicht auf das in Fig. 1 gezeigte Ausführungsbeispiel eines erfindungsgemäßen Transportsterns, bei dem alle zehn Griffe gezeigt sind,

Fig. 4 einen Vertikalschnitt durch den Transportstern entlang der in Fig. 3 mit IV-IV gekennzeichneten Ebene.

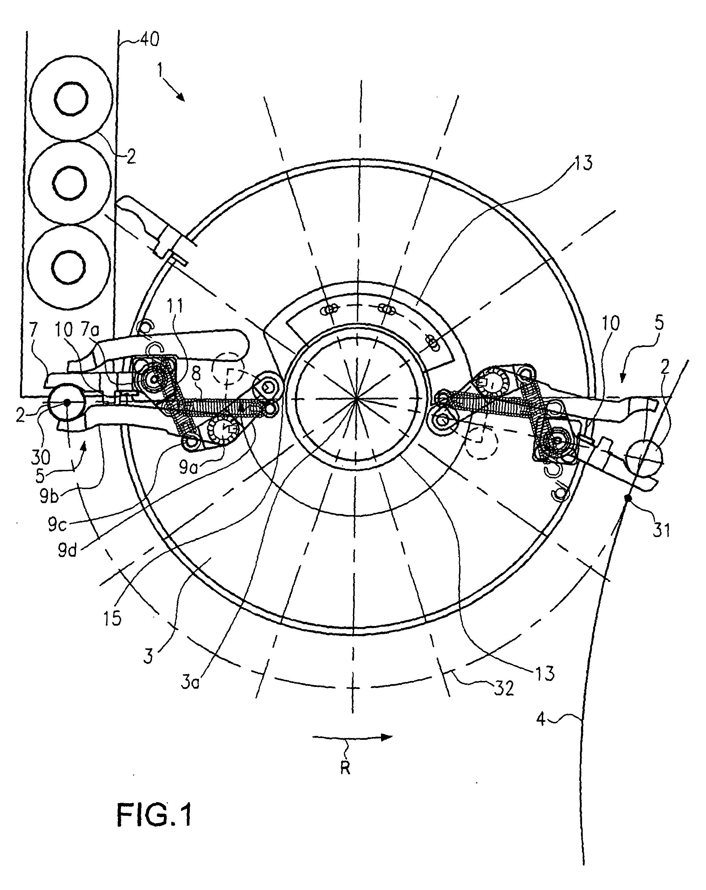

Der in Fig. 1 dargestellte Transportstern 1 für Gefäße 2 weist eine um eine vertikale Rotorachse 3a drehbare, horizontale Rotorscheibe 3 auf. Die Gefäße 2 können mittels des Transportsterns 1 von einer Abholposition 30 zu einer Übergabeposition 31 transportiert werden, wobei sie an der Abholposition 30 in Ruhe sind und auf der Übergabeposition 31 eine bestimmte Geschwindigkeit erreicht haben. Die Rotations- und Förderrichtung ist mit R bezeichnet.

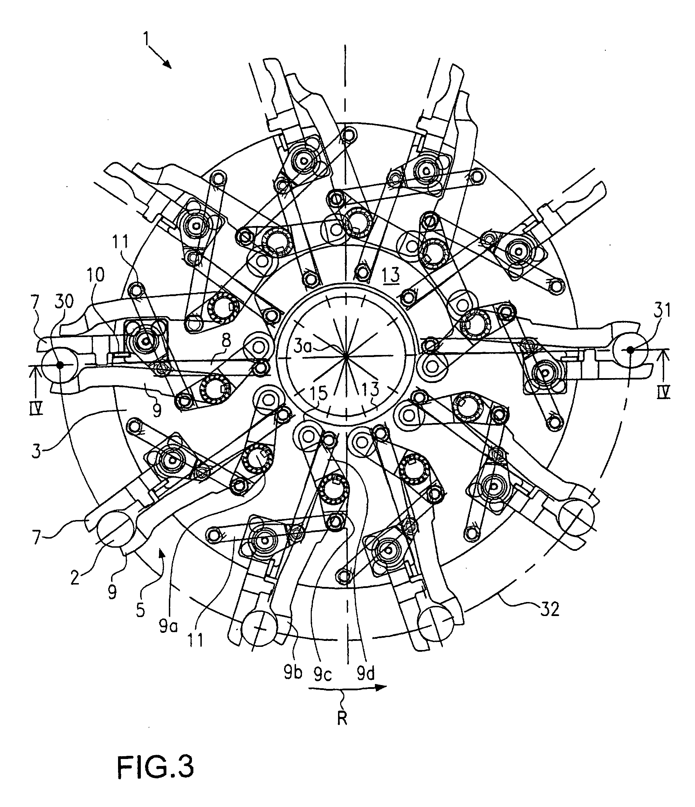

Auf dem Weg von der Abholposition 30 zur Übergabeposition 31 wird jedes Gefäß 2 mittels eines an der Rotorscheibe 3 befestigten Griffes 5 gehalten. Das gezeigte Ausführungsbeispiel weist zehn solcher Griffe 5 auf, die äquidistant an der Rotorscheibe 3 angeordnet sind (vgl. Fig. 3). In Fig. 1 sind der Übersichtlichkeit halber lediglich zwei der Griffe 5 dargestellt. Die Griffe 5 sind jeweils identisch aufgebaut.

Jeder dieser Griffe 5 weist einen Führungsarm 7 und einen ihm in Rotationsrichtung R voranlaufenden Folgearm 9 auf, die jeweils um eine vertikale Achse 7a bzw. 9a schwenkbar sind. Die Achsen 7a und 9a sind an der Rotorscheibe 3 montiert, so dass sie deren Bewegung R mit ausführen.

Der Führungsarm 7, der hier der nachlaufende Griffarm ist, dient zum Erfassen eines Gefäßes 2 von einer Zuliefervorrichtung 40 und zum Führen eines ergriffenen Gefäßes 2 am Transportstern 1 in Rotationsrichtung R. Auf der Zuliefervorrichtung 40 werden die Gefäße 2 in einer Reihe nacheinander an eine Abholposition 30 transportiert. An der Abholposition 30 wird das vom nachfolgenden Gefäß beabstandete vorderste Gefäß 2 mittels eines Stoppers (nicht gezeigt) angehalten. Der Führungsarm greift auf Grund seiner Länge und der Anordnung der Zuliefervorrichtung 40 in den Zwischenraum zwischen dem vordersten und dem nachfolgenden Gefäß ein, beaufschlagt das in der Abholposition befindliche Gefäß 2 und beschleunigt es in Rotationsrichtung R des Transportsterns 1.

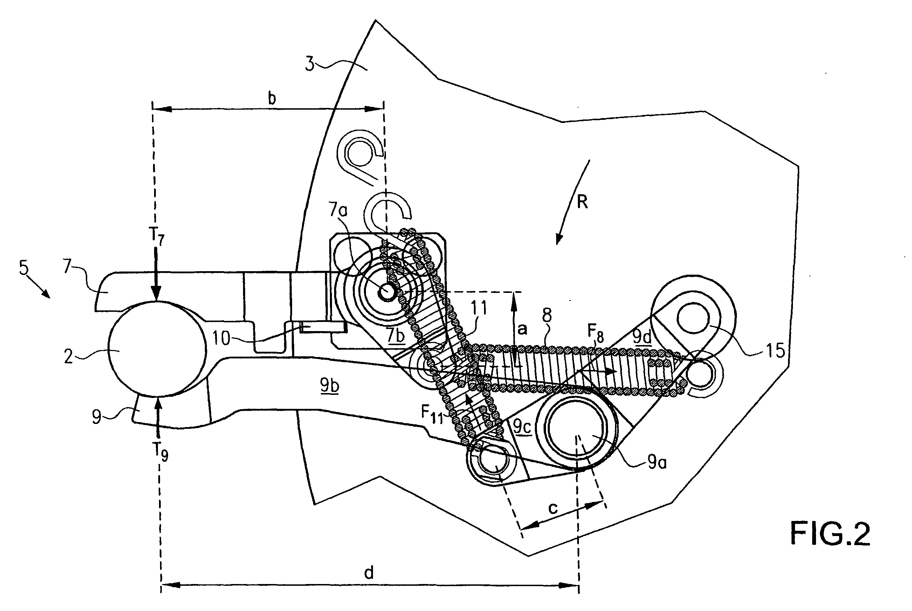

Wie anhand von Fig. 2 genauer erläutert werden wird, ist ein am Führungsarm 7 befestigter Hebelarm 7b mit einer ersten elastischen Zugfeder 8 so verbunden, dass der Führungsarm 7 unter einer auf die Schließstellung gerichteten Vorspannung steht. In Rotationsrichtung R vor dem Führungsarm 7 ist ein Anschlag 10 vorgesehen, der eine Auslenkung des Führungsarms 7 über die Schließstellung hinaus verhindert. Der Anschlag 10 ist hier als ein vertikal von der Rotorscheibe 3 abstehender Block ausgebildet.

Der Folgearm 9 weist drei verschiedene Hebelarme 9b, 9c, 9d auf, die wie eine Einheit gemeinsam um die Achse 9a schwenkbar sind. Diese drei Hebelarme 9 b-d erfüllen unterschiedliche Aufgaben:

- Der Hebelarm 9b, der über den Umfang der Rotorscheibe 3 hinausragt, kann zwischen sich und dem Führungsarm 7 ein Gefäß 2 halten. Um dabei ein Kippen oder Schwanken des Gefäßes 2 zu verhindern, sind der Führungsarm 7 und der Hebelarm 9b mit einander gegenüberliegenden Aussparungen versehen, zwischen denen ein z.B. zylinderförmiger Abschnitt eines Gefäßes 2 greifbar ist. Um ein Mitnehmen des Gefäßes 2 von der Abholposition 30 zu erleichtern, ragt der nachlaufende Griffarm 7, der hier der Führungsarm ist, etwas weiter über die Rotorscheibe 3 hinaus als der Hebelarm 9b des Folgearms.

- Der Hebelarm 9c ist mit einem Ende einer zweiten elastischen Zugfeder 11 verbunden, deren anderes Ende an der Rotorscheibe 3 befestigt ist. Durch die Spannung der Zugfeder 11 wird der Hebelarm 9b an den Führungsarm 7 herangezogen, wodurch ein zwischen dem Führungsarm und dem Folgearm (7 bzw. 9b) befindliches Gefäß gehalten werden kann.

- Der Hebelarm 9d weist an seinem von der Achse 9a fortweisenden Ende ein Laufrad 15 auf, welches an einer Kurvensteuerung 13 anliegt. Diese Kurvensteuerung 13 ist ortsfest so an der Vorrichtung 1 angeordnet, dass sie an der Rotation R der Rotorscheibe 3 nicht teilnimmt.

Die Kurvensteuerung 13 weist zwei kreissegmentförmige Abschnitte mit der Rotorachse 3a jeweils als Mittelpunkt auf, wobei der eine Abschnitt einem kleineren Kreisradius entspricht als der andere. Zwischen den beiden Abschnitten bestehen jeweils Übergangsbereiche, in denen der radiale Abstand der Kurvensteuerung 13 von der Rotorachse 3a von dem kleineren Kreisradius zum größeren übergeht, und umgekehrt. Infolge dieser Ausgestaltung der Kurvensteuerung 13 nimmt das an ihr anliegende Laufrad 15 während seiner Bewegung mit der Rotorscheibe 3 unterschiedliche Abstände von der Rotorachse 3a an; daraus wiederum resultiert eine Schwenkbewegung des Folgearms 9 um seine Achse 9a.

Entsprechend den zwei kreissegmentförmigen Abschnitten der Kurvensteuerung 13 schwenkt der Folgearm 9 zwischen zwei Stellungen: einer geöffneten Stellung und einer geschlossenen. In der geöffneten Stellung, die der Griff 5 annimmt, wenn das Laufrad 15 an dem Kreissegment der Kurvensteuerung 13 mit dem größeren Kreisradius anliegt, liegt der voranlaufende Griffarm 9 mit seinem Hebelarm 9b an der Rückseite des vorangehenden Griffes 5 an.

Seine geschlossene Stellung nimmt der Griff 5 an, wenn das Laufrad 15 an dem Kreissegment der Kurvensteuerung 13 mit dem kleineren Kreisradius anliegt. In dieser Stellung, die von den Griffen 5 zwischen der Abholposition 30 und der Übergabeposition 31 angenommen wird, ist ein Gefäß 2 greifbar. In den Übergangsbereichen findet das Öffnen bzw. Schließen des Griffes 5 statt.

Das Laufrad 15 des in der Figur links dargestellten Griffs 5 befindet sich exakt am Beginn des Abschnittes der Kurvensteuerung 13, der dem kleineren Kreisradius entspricht. Der Griff 5 ist folglich soeben um den auf der Abholposition 30 befindliches Gefäß 2 geschlossen worden. Wäre der Durchmesser des Gefäßes 2 größer, so würde der Griff 5 nur bis zu einem Kontakt zwischen dem Gefäß 2 und dem Folgearm 9 geschlossen; das Laufrad 15 würde in diesem Fall bis zum folgenden Übergangsbereich nicht an der Kurvensteuerung 13 anliegen.

Das Laufrad 15 des in der Figur rechts dargestellten Griffs 5 befindet sich exakt am Ende des Abschnittes der Kurvensteuerung 13, der dem kleineren Kreisradius entspricht. Indem das Laufrad 15, das auf Grund der Rotation R um die Rotorachse 3a läuft, auf dem Übergangsbereich der Kurvensteuerung 13 einen wachsenden Abstand von der Rotorachse 3a annimmt, geht der Griff 5 in seine geöffnete Stellung über. Das Gefäß 2 kann dann in der Übergabeposition 31 z.B. an die nachfolgende Vorrichtung 4 (z.B. ein Wasch-Karussell) abgegeben werden.

Dazu öffnet sich der Folgearm 9 bedingt durch die Kurvensteuerung 13 möglichst in demselben Moment, in dem das Gefäß 2 von einem Griff an der nachfolgenden Vorrichtung 4 erfasst wird. Die Bewegungsbahn des Gefäßes 2 wird von diesem Übergabepunkt an von der nachfolgenden Vorrichtung 4 bestimmt. Das erfindungsgemäße, passive Öffnen des Führungsarms 7, im hier gezeigten Ausführungsbeispiel in Draufsicht im Uhrzeigersinn, sorgt dafür, dass diese Bewegung nicht durch den Führungsarm 7 behindert wird, wenn sich dieser entlang des Transportsterns weiter fortbewegt. Ein starrer, unbeweglicher Führungsarm könnte zu einem Verkanten des Gefäßes 2 in der Übergabeposition führen und somit den Ablauf der gesamten Anlage zum Stillstand bringen. Beim passiven Öffnen bleibt der Kontakt zwischen dem Führungsarm 7 und dem Gefäß 2 noch für eine gewisse Weile erhalten, was die Führung des Gefäßes 2 verbessert und die Anforderungen an die Synchronisierung des Transportsterns 1 und der nachfolgenden Vorrichtung 4 herabsetzt.

In Fig. 1 ist der Führungsarm 7 des Griffes 5 an der Übergabeposition 31 in einer Stellung gezeigt, in der er sich bereits leicht im Uhrzeigersinn aus der Schließstellung entfernt hat. Dies wird daran ersichtlich, dass der Führungsarm 7 nicht länger am Anschlag 10 anliegt. Das Gefäß 2 hat die kreisbogenförmige Bewegungsbahn 32 verlassen und wird sich nach dem Übergabepunkt 31 an der Vorrichtung 4 bewegen.

Fig. 2 zeigt eine Draufsicht auf einen Griff 5 des in Fig. 1 gezeigten Transportsterns 1. In der gezeigten Schließstellung des Griffes ist ein Gefäß 2 zwischen dem Führungsarm 7 und dem Folgearm 9 erfasst worden und kann nun in Rotationsrichtung R mitgeführt werden.

Der um die Achse 7a schwenkbare Führungsarm 7 weist einen Hebelarm 7b auf, an dessen Ende eine Zugfeder 8 so angreift, dass der Führungsarm 7 mit einer auf die Schließstellung gerichteten Vorspannung versehen ist. Das andere Ende der Zugfeder 8 ist fest mit der Rotorscheibe 3 verbunden. Die Zugfeder 8 hat eine Federkonstante $k_8$ und in der Schließstellung eine Federkraft $F_8$. Dem von ihr auf den Führungsarm 7 ausgeübten Drehmoment ($F_8 \cdot a$) wirkt entgegen, dass der Führungsarm 7 einen vor ihm angeordneten Anschlag 10 beaufschlagt. Der Anschlag 10 verhindert, dass sich der Führungsarm 7 über die Schließposition (d.h. eine im Wesentlichen radial von der Rotorachse 3a fortweisende Stellung) nach vorn bewegt. Der Führungsarm kann sich von der Schließstellung aus nur in Uhrzeigerrichtung bewegen. Durch den radialen Abstand b des Gefäßes 2 im Bezug auf die Achse 7a setzt der Führungsarm 7 einer Auslenkung in Uhrzeigerrichtung in tangentialer Richtung eine Kraft

$$T7 = F_8 \cdot (a/b)$$

entgegen. Dabei ist a der laterale Abstand der Zugfeder 8 von der Achse 7a.

In entsprechender Weise wirkt durch die zweite Zugfeder 11 eine Federkraft $F_{11}$. Indem die Zugfeder 11 am Hebelarm 9c des Folgearms 9 angreift, erzeugt sie ein Drehmoment ($F_{11} \cdot c$) des Folgearms 9 um die Achse 9a. Am Ort des ergriffenen Gefäßes 2 wirkt in tangentialer Richtung eine Kraft

$$T9 = F_{11} \cdot (c/d),$$

wobei c der laterale Abstand der Zugfeder 11 von der Achse 9a ist und d der radiale Abstand der Gefäßposition von der Achse 9a ist.

Gemäß der vorliegenden Erfindung ist der eine Griffarm 7 der Führungsarm und der andere der Folgearm 9. Dabei bewirkt der Führungsarm 7 das Führen der Gefäße 2 entlang des Transportsterns 1. Er bietet eine Anlagefläche, gegen die der Folgearm 9 das Gefäß 2 festhält. Damit der Folgearm den Führungsarm nicht aus der Schließstellung heraus auslenkt, ist erfindungsgemäß die tangentiale Vorspannung T7 des Führungsarms 7 größer als die tangentiale Vorspannung T9 des Folgearms 9, während der Führungsarm 7 in der anderen Richtung vorzugsweise durch einen Anschlag 10 an einer Auslenkung gehindert wird.

Das Verhältnis T7 > T9 kann beispielsweise selbst bei gleichen Federkräften F8 = F11 erzielt werden, indem für das Verhältnis der jeweiligen Hebellängen gilt:

$$a/b > c/d.$$

Dies ermöglicht es, gleiche Zugfedern 8 und 11 zu verwenden, um Kosten zu sparen.

Bevorzugt ist die tangentiale Vorspannung T7 des Führungsarms 7 kleiner als die Kraft, mit der ein Gefäß 2 an der Übergabeposition 31 von einer nachfolgenden Vorrichtung 4 erfasst wird. Sobald das Gefäß 2 von der nachfolgenden Vorrichtung 4 ergriffen ist, kann der Führungsarm 7 passiv in Uhrzeigerrichtung öffnen, so dass er die weitere Bewegung des Gefäßes 2 nicht behindert.

Fig. 3 zeigt eine Draufsicht auf das in Fig. 1 gezeigte Ausführungsbeispiel eines erfindungsgemäßen Transportsterns 1, wobei hier alle zehn Griffe 5 gezeigt sind. Sie verteilen sich äquidistant auf dem Umfang der Rotorscheibe 3.

In Fig. 3 nehmen auf Grund der Form der Kurvensteuerung 13 die in der Zeichnung oberen vier Griffe 5 ihre geöffnete Stellung an, während die unteren sechs Griffe 5 jeweils um ein Gefäß 2 geschlossen sind. In der Schließstellung transportieren sie die Gefäße so in Rotationsrichtung R auf einem Kreisbogen 32 von der Abholposition 30 zur Übergabeposition 31. Dieser Kreisbogen 32, der mit der Bewegungsbahn der Gefäße 2 entlang des Transportsterns 1 identisch ist, erstreckt sich im gezeigten Ausführungsbeispiel über einen Winkel von 180°. Er könnte auch einen beliebigen anderen Wert zwischen beispielsweise 20° und 300° besitzen.

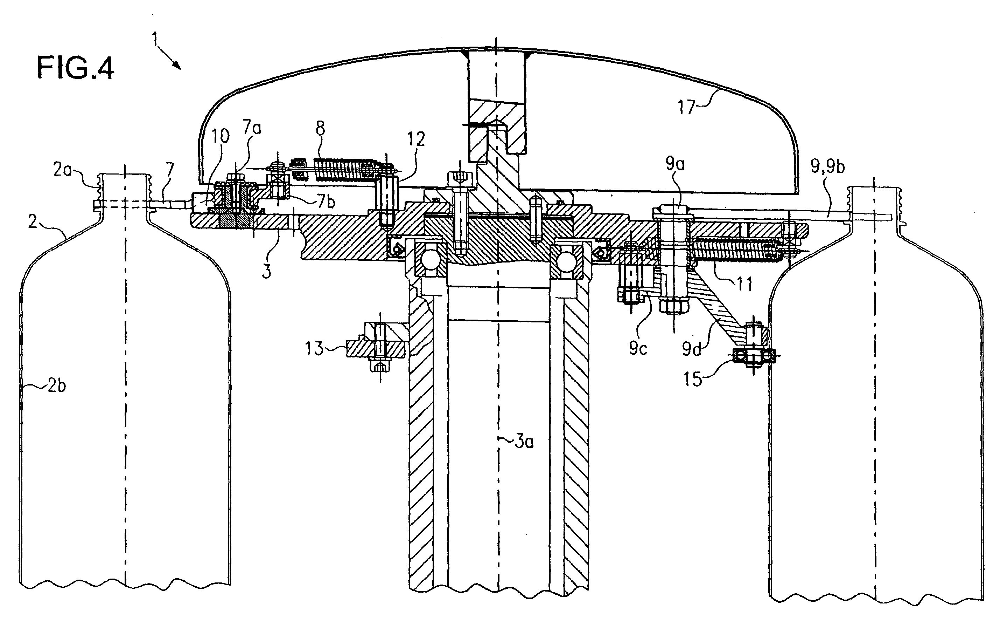

Fig. 4 zeigt einen Vertikalschnitt durch den bisher beschriebenen Transportstern 1 entlang der in Fig. 3 mit IV-IV Ebene. Zu sehen ist hier insbesondere, dass die Gefäße 2 aufrecht und mit ihrem Halsbereich 2a über dem Körperbereich 2b um die in diesem Ausführungsbeispiel vertikale Rotorachse 3a transportiert werden. Zu sehen ist ferner, dass sowohl der Führungsarm 7, als auch der Hebelarm 9b des Folgearms 9 oberhalb der Rotorscheibe 3 angeordnet sind, und dass sie das Gefäß 2 in seinem Halsbereich 2a jeweils seitlich beaufschlagen.

Die Zugfeder 8 ist an einem Ende mit dem Hebelarm 7a des Führungsarms 7 verbunden, am anderen Ende mit einem Stift 12, der in einer Vertiefung auf der Oberseite der Rotorscheibe 3 befestigt ist.

Die Achse 9a des Folgearms 9 geht durch die Rotorscheibe 3 hindurch. An der Achse 9a sind die Hebelarme 9b-d des Folgearms 9 so angeordnet, dass sie gemeinsam miteinander und mit der Achse 9a schwenkbar sind. Die Hebelarme 9c und 9d sind unterhalb der Rotorscheibe 3 angeordnet, ebenso wie die Zugfeder 11, die an ihrem einen Ende an dem Hebelarm 9c befestigt ist. Auf Grund der Verteilung der beweglichen Elemente der beiden Griffarme 7,9 auf Ober- und Unterseite der Rotorscheibe 3 verringert sich die Gefahr, dass sich diese Teile in ihren Bewegungen gegenseitig behindern.

Der Hebelarm 9d ist in Fig. 4 zur Verdeutlichung seiner Struktur in einer Stellung gezeigt, in der er sich radial von der Rotorachse 3a erstreckt. An seinem äußeren Ende weist er ein um eine eigene Achse drehbares Laufrad 15 auf. Eine solche Stellung nimmt der Abschnitt 9d im üblichen Betrieb der Vorrichtung nicht ein, statt dessen liegt das Laufrad 15 üblicherweise an der Kurvensteuerung 13 an.

Zum Schutz der Vorrichtung vor Verunreinigung, insbesondere zum Schutz ihrer beweglichen Teile, weist sie eine Abdeckung 17 auf. Zum Erzeugen der Rotation R der Rotorachse 3a und der Rotorscheibe 3 weist sie ferner einen (hier nicht gezeigten) Antrieb auf.

**Patentansprüche**

1. Transportstern (1) zum Transportieren von Gefäßen (2) an eine nachfolgende Vorrichtung, beispielsweise an ein Wasch-Karussell, mit einer um eine Rotorachse (3a) drehbaren Rotorscheibe (3), mindestens einem daran montierten Griff (5) mit zwei relativ zueinander und unabhängig voneinander beweglichen Griffarmen (7, 9), zwischen denen in einer Schließstellung des Griffes (5) je ein Gefäß (2) festhaltbar ist, wobei jeder der beiden Griffarme (7, 9) mit einer auf die Schließstellung des Griffes (5) gerichteten tangentialen Vorspannung versehen ist und die Griffarme (7, 9) um senkrecht zur Rotorscheibe (3) angeordnete Achsen (7a, 9a) verschwenken, wobei ferner der eine Griffarm (7) ein Führungsarm und der andere ein Folgearm (9) ist, **dadurch gekennzeichnet, dass** die tangentiale Vorspannung (T7) des Führungsarms (7) größer als die tangentiale Vorspannung (T9) des Folgearms (9) ist und dass die tangentiale Vorspannung (T7) des Führungsarmes (7) schwächer als die von der nachfolgenden Vorrichtung (4) zum Ergreifen des Gefäßes (2) ausgeübte Kraft ist.

**2.** Transportstern nach Anspruch 1, **dadurch gekennzeichnet, dass** der nachlaufende Griffarm (7) der Führungsarm ist und der vorlaufende Griffarm (9) der Folgearm.

**3.** Transportstern nach wenigstens einem der vorangehenden Ansprüche, **dadurch gekennzeichnet, dass** die Position des Gefäßes (2) in der Schließstellung durch den Führungsarm (7) festgelegt ist.

**4.** Transportstern nach wenigstens einem der vorangehenden Ansprüche, **dadurch gekennzeichnet, dass** der Folgearm (9) sich bei der Schließbewegung so weit auf den Führungsarm (7) zu bewegt, bis er das zu ergreifende Gefäß (2) beaufschlagt.

**5.** Transportstern nach wenigstens einem der vorangehenden Ansprüche, **dadurch gekennzeichnet, dass** mindestens ein Anschlag (10) vorgesehen ist, der den Auslenkungswinkel des Führungsarms (7) begrenzt.

**6.** Transportstern nach wenigstens einem der vorangehenden Ansprüche, **dadurch gekennzeichnet, dass** die tangentiale Vorspannung (T7) des Führungsarms (7) mindestens so stark ist, dass dieser ein in einer Abholposition (30) ruhendes Gefäß (2) mitführt.

**7.** Transportstern nach wenigstens einem der vorangehenden Ansprüche, **dadurch gekennzeichnet, dass** mindestens ein Griffarm (7, 9) gemeinsam mit einem Hebelarm verschwenkt und ein Ende einer Zugfeder (8, 11) mit dem Hebelarm verbunden ist.

**8.** Transportstern nach wenigstens Anspruch 8, **dadurch gekennzeichnet, dass** das andere Ende der Zugfeder (8, 11) an der Rotorscheibe befestigt ist.

**9.** Transportstern nach wenigstens einem der Ansprüche 7 oder 8, **dadurch gekennzeichnet, dass** ein zu dem Führungsarm (7) gehörender Hebelarm (7a) und die Zugfeder (8) auf einer anderen Seite der Rotorscheibe (3) angeordnet sind als ein zum Folgearm (9) gehörender Hebelarm (9d) und die Zugfeder (11).

**10.** Transportstern nach wenigstens einem der vorangehenden Ansprüche, **dadurch gekennzeichnet, dass** der Transportstern (1) eine ortsfeste Kurvensteuerung (13) aufweist, die die Bewegung des Folgearms (9) bestimmt.

**11.** Transportstern nach wenigstens einem der vorangehenden Ansprüche, **dadurch gekennzeichnet, dass** die beiden Griffarme (7, 9) an ihrem äußeren Ende Aussparungen aufweisen, in denen der Hals (2a) eines Gefäßes (2) und/oder ein anderer Abschnitt eines Gefäßes (2) greifbar ist.

**12.** Transportstern nach wenigstens einem der vorangehenden Ansprüche, **dadurch gekennzeichnet, dass** mehrere Griffe (5) äquidistant an der Rotorscheibe (3) angeordnet sind.

**13.** Transportstern nach wenigstens einem der vorangehenden Ansprüche, **dadurch gekennzeichnet, dass** die Rotationsgeschwindigkeit der Rotorscheibe (3) über deren Antrieb stufenlos einstellbar ist.

**14.** Transportstern nach wenigstens einem der vorangehenden Ansprüche, **dadurch gekennzeichnet, dass** Antrieb der Rotorscheibe (3) mit dem Antrieb einer dem Transportstern (1) nachgeordneten Förder- oder Bearbeitungseinrichtung (4) für die Gefäße koordinierbar ist.

**15.** Transportstern nach wenigstens einem der vorangehenden Ansprüche, **dadurch gekennzeichnet, dass** der nachlaufende Griffarm (7) weiter über den Rand der Rotorscheibe (3) vorsteht als der vorlaufende Griffarm (9).

**16.** Transportstern nach wenigstens einem der vorangehenden Ansprüche, **dadurch gekennzeichnet, dass** der vorlaufende Griffarm (9) in der vollständig geöffneten Stellung des Griffes (5) am in Rotationsrichtung (R) vorangehenden Griff (5) anliegt.

**17.** Transportstern nach wenigstens einem der Ansprüche 10 bis 16, **dadurch gekennzeichnet, dass** der Folgearm (9) mindestens drei sich von der Griffachse (9a) radial erstreckende und wie eine Einheit miteinander und mit der Griffachse schwenkbare Hebelarme (9b, 9c, 9d) aufweist, wobei einer (9b) an seinem Ende eine vertikale Aussparung zum Beaufschlagen und Greifen des Gefäßes (2) aufweist, ein zweiter (9c) in Abhängigkeit von der Kurvensteuerung (13) bewegbar ist und ein dritter (9d) durch die Zugfeder (11) an der Rotorscheibe (3) vorgespannt ist.

**18.** Transportstern nach wenigstens einem der Ansprüche 10 bis 17, **dadurch gekennzeichnet, dass** der Folgearm (9) an seinem in Abhängigkeit von der Kurvensteuerung (13) bewegbaren Hebelarm (9c) ein Laufrad (15) aufweist, welches aufgrund der von der Zugfeder (11) erzeugten Vorspannung an der Kurvensteuerung (13) anliegt.

**19.** Transportstern nach wenigstens einem der Ansprüche 10 bis 18, **dadurch gekennzeichnet, dass** die Kurvensteuerung (13) zwei kreissegmentförmige Abschnitte mit jeweils der Rotorachse (3a) als Mittelpunkt aufweist, wobei der eine Abschnitt einem kleineren Kreisradius entspricht als der andere, und dass zwischen den beiden Abschnitten jeweils Übergangsbereiche liegen.

20. Transportstern nach wenigstens einem der Ansprüche 18 oder 19, **dadurch gekennzeichnet, dass** jeder Griff (5) seine geöffnete Stellung annimmt, wenn das Laufrad (15) an dem Kreissegment der Kurvensteuerung (13) mit dem größeren Kreisradius anliegt, und dass der Griff (5) seine Schließstellung annimmt, wenn das Laufrad (15) an dem Kreissegment der Kurvensteuerung (13) mit dem kleineren Kreisradius anliegt.

**Claims**

1. Star conveyor (1) for conveying receptacles (2) to a downstream device, for example a washing carousel, with a rotor disc (3) rotatable about a rotor axis (3a), at least one grip (5) mounted thereon having two grip arms (7, 9) which are displaceable relative to one another and independently of one another, between which a receptacle (2) can be respectively gripped when the grip (5) is in a closed position, each of the two grip arms (7, 9) having a forward bias oriented at a tangent to the closed position of the grip (5), and the grip arms (7, 9) pivot about spindles (7a, 9a) disposed perpendicular to the rotor disc (3), one grip arm (7) being a guide arm and the other a follower arm (9), **characterised in that** the tangential forward bias (T7) of the guide arm (7) is more pronounced than the tangential forward bias (T9) of the follower arm (9) and the tangential forward bias (T7) of the guide arm (7) is weaker than the force exerted by the downstream device (4) in order to grip the receptacle (2).

2. Star conveyor as claimed in claim 1, **characterised in that** the trailing grip arm (7) is the guide arm and the leading grip arm (9) is the follower arm.

3. Star conveyor as claimed in at least one of the preceding claims, **characterised in that** the position of the receptacle (2) in the closed position is determined by the guide arm (7).

4. Star conveyor as claimed in at least one of the preceding claims, **characterised in that** the follower arm (9) is moved towards the guide arm (7) during the closing movement until it is pressing against the receptacle (2) to be gripped.

5. Star conveyor as claimed in at least one of the preceding claims, **characterised in that** at least one stop (10) is provided, which restricts the deflection angle of the guide arm (7).

6. Star conveyor as claimed in at least one of the preceding claims, **characterised in that** the tangential forward bias (T7) of the guide arm (7) is at least strong enough to drive a stationary receptacle (2) along with it from a pick-up position (30).

7. Star conveyor as claimed in at least one of the preceding claims, **characterised in that** at least one grip arm (7, 9) pivots jointly with a lever arm and one end of a tension spring (8, 11) is connected to the lever arm.

8. Star conveyor as claimed in at least claim 8, **characterised in that** the other end of the tension spring (8, 11) is attached to the rotor disc.

9. Star conveyor as claimed in at least one of claims 7 or 8, **characterised in that** a lever arm (7a) belonging to the guide arm (7) and the tension spring (8) are disposed on a different side of the rotor disc (3) than a lever arm (9d) belonging to the follower arm (9) and the tension spring (11).

10. Star conveyor as claimed in at least one of the preceding claims, **characterised in that** the star conveyor (1) has a stationary cam controller (13), which determines the movement of the follower arm (9).

11. Star conveyor as claimed in at least one of the preceding claims, **characterised in that** the two grip arms (7, 9) have cut-outs at their outer ends, in which the neck (2a) of a receptacle (2) and/or another portion of a receptacle (2) can be gripped.

12. Star conveyor as claimed in at least one of the preceding claims, **characterised in that** several grips (5) are disposed equidistantly on the rotor disc (3).

13. Star conveyor as claimed in at least one of the preceding claims, **characterised in that** the rotation speed of the rotor disc (3) is infinitely adjustable by means of its drive.

14. Star conveyor as claimed in at least one of the preceding claims, **characterised in that** the drive of the rotor disc (3) can be co-ordinated with the drive of a conveyor or processing system (4) for the receptacles disposed downstream of the star conveyor (1).

15. Star conveyor as claimed in at least one of the preceding claims, **characterised in that** the trailing grip arm (7) projects farther beyond the edge of the rotor disc (3) than the leading grip arm (9).

16. Star conveyor as claimed in at least one of the preceding claims, **characterised in that** the leading grip arm (9) sits in abutment with the preceding grip (5) in the rotation direction (R) when the grip (5) is in the fully opened position.

17. Star conveyor as claimed in at least one of claims 10 to 16, **characterised in that** the follower arm (9) has at least three lever arms (9b, 9c, 9d) extending radially from the grip spindle (9a) and pivotable as a unit with one another and with the grip spindle, one (9b) of which has a vertical cut-out at its end for applying pressure to and gripping the receptacle (2), a second (9c) is displaceable under the control of the cam controller (13) and a third (9d) is biased against the rotor disc (3) by the tension spring (11).

18. Star conveyor as claimed in at least one of claims 10 to 17, **characterised in that** the follower arm (9) has a running wheel (15) on its lever arm (9c) which is displaceable by means of the cam controller (13) and abuts with the cam controller (13) due to the biasing force generated by the tension spring (11).

19. Star conveyor as claimed in at least one of claims 10 to 18, **characterised in that** the cam controller (13) has two segment-shaped portions in which the rotor axis (3a) constitutes the centre point in each case, one portion having a smaller radius than the other, and transition regions lie respectively between the two portions.

20. Star conveyor as claimed in at least one of claims 18 or 19, **characterised in that** every grip (5) assumes its opened position when the running wheel (15) lies in contact with the segment of the cam controller (13) having the bigger radius and the grip (5) assumes its closed position when the running wheel (15) lies in contact with the segment of the cam controller (13) having the smaller radius.

**Revendications**

1. Système de transport en étoile (1) pour transporter des récipients (2) jusqu'à un dispositif suivant, par exemple un carrousel de lavage, comprenant un disque de rotor (3) apte à tourner autour d'un axe de rotor (3a) et au moins une pince (5) montée sur le disque de rotor (3) et pourvue de deux bras de préhension (7, 9) qui sont mobiles l'un par rapport à l'autre et indépendamment l'un de l'autre et entre lesquels un récipient (2) peut être bloqué dans une position fermée de la pince (5), chacun des deux bras de préhension (7, 9) étant pourvu d'une contrainte tangentielle dirigée vers la position fermée de la pince (5), les bras de préhension (7, 9) pivotant autour d'axes (7a, 9a) perpendiculaires au disque de rotor (3) et un bras (7) constituant un bras de guidage tandis que l'autre constitue un bras suiveur (9), **caractérisé en ce que** la contrainte tangentielle (T7) du bras de guidage (7) est plus grande que la contrainte tangentielle (T9) du bras suiveur (9), et **en ce que** la contrainte tangentielle (T7) du bras de guidage (7) est plus faible que la force qui est exercée par le dispositif suivant (4) pour saisir le récipient (2).

2. Système de transport en étoile selon la revendication 1, **caractérisé en ce que** le bras de préhension situé en arrière (7) constitue le bras de guidage et le bras de préhension situé en avant (9) constitue le bras suiveur.

3. Système de transport en étoile selon l'une au moins des revendications précédentes, **caractérisé en ce que** la position du récipient (2) est bloquée en position fermée par le bras de guidage (7).

4. Système de transport en étoile selon l'une au moins des revendications précédentes, **caractérisé en ce que** le bras suiveur (9), lors du mouvement de fermeture, se déplace vers le bras de guidage (7) jusqu'à ce qu'il contraigne le récipient (2) à saisir.

5. Système de transport en étoile selon l'une au moins des revendications précédentes, **caractérisé en ce qu'**il est prévu au moins une butée (10) qui limite l'angle de déviation du bras de guidage (7).

6. Système de transport en étoile selon l'une au moins des revendications précédentes, **caractérisé en ce que** la contrainte tangentielle (T7) du bras de guidage (7) est au moins suffisamment grande pour que celui-ci entraîne un récipient (2) arrêté en position d'enlèvement (30).

7. Système de transport en étoile selon l'une au moins des revendications précédentes, **caractérisé en ce qu'**au moins un bras de préhension (7, 9) pivote conjointement avec un bras de levier, et une extrémité d'un ressort de traction (8, 11) est reliée au bras de levier.

8. Système de transport en étoile selon au moins la revendication 8, **caractérisé en ce que** l'autre extrémité du ressort de traction (8, 11) est fixée au disque de rotor.

9. Système de transport en étoile selon l'une au moins des revendications 7 ou 8, **caractérisé en ce qu'**un bras de levier (7a) appartenant au bras de guidage (7) et le ressort de traction (8) ne sont pas disposés sur le même côté du disque de rotor (3) qu'un bras de levier (9d) appartenant au bras suiveur (9) et le ressort de traction (11).

**10.** Système de transport en étoile selon l'une au moins des revendications précédentes, **caractérisé en ce qu'**il comporte une commande à came fixe (13) qui définit le mouvement du bras suiveur (9).

**11.** Système de transport en étoile selon l'une au moins des revendications précédentes, **caractérisé en ce que** les deux bras de préhension (7, 9) présentent sur leur extrémité extérieure des évidements dans lesquels le goulot (2a) d'un récipient (2) et/ou une autre section d'un récipient (2) peuvent pénétrer.

**12.** Système de transport en étoile selon l'une au moins des revendications précédentes, **caractérisé en ce que** plusieurs pinces (5) sont disposées à égale distance sur le disque de rotor (3).

**13.** Système de transport en étoile selon l'une au moins des revendications précédentes, **caractérisé en ce que** la vitesse de rotation du disque de rotor (3) est apte à être réglée progressivement par l'intermédiaire de l'entraînement de celui-ci.

**14.** Système de transport en étoile selon l'une au moins des revendications précédentes, **caractérisé en ce que** l'entraînement du disque de rotor (3) est apte à être coordonné à l'entraînement d'un dispositif d'acheminement ou de traitement (4) pour les récipients qui est disposé en aval du système de transport en étoile (1).

**15.** Système de transport en étoile selon l'une au moins des revendications précédentes, **caractérisé en ce que** le bras de préhension situé en arrière (7) dépasse davantage du bord du disque de rotor (3) que le bras de préhension situé en avant (9).

**16.** Système de transport en étoile selon l'une au moins des revendications précédentes, **caractérisé en ce que** le bras de préhension situé en avant (9), dans la position complètement ouverte de la pince (5), est appliqué contre la pince (5) précédente dans le sens de rotation (R).

**17.** Système de transport en étoile selon l'une au moins des revendications 10 à 16, **caractérisé en ce que** le bras suiveur (9) comporte au moins trois bras de levier (9b, 9c, 9d) qui s'étendent radialement à partir de l'axe de pince (9a) et qui sont aptes à pivoter comme une unité ensemble et avec l'axe de pince, un bras (9c) présentant à son extrémité un évidement vertical pour contraindre et saisir le récipient (2) tandis qu'un deuxième bras (9c) est mobile en fonction de la commande à came (13) et qu'un troisième bras (9d) est contraint par le ressort de traction (11) sur le disque de rotor (3).

**18.** Système de transport en étoile selon l'une au moins des revendications 10 à 17, **caractérisé en ce que** le bras suiveur (9) présente sur son bras de levier (9c) mobile en fonction de la commande à came (13) un galet (15) qui, du fait de la contrainte générée par le ressort de traction (11), est appliqué contre la commande à came (13).

**19.** Système de transport en étoile selon l'une au moins des revendications 10 à 18, **caractérisé en ce que** la commande à came (13) comporte deux sections en forme de segment de cercle ayant chacun l'axe de rotor (3a) comme centre, une section correspondant à un rayon plus petit que l'autre, et **en ce qu'**il y a des zones de transition entre les deux sections.

**20.** Système de transport en étoile selon l'une au moins des revendications 18 ou 19, **caractérisé en ce que** chaque pince (5) adopte sa position ouverte quand le galet (15) est appliqué contre le segment de cercle de la commande de came (13) qui présente le grand rayon, et **en ce que** la pince (5) adopte sa position fermée quand le galet (15) est appliqué contre le segment de cercle de la commande à came (13) qui présente le petit rayon.

FIG.1

FIG.2

FIG.3

FIG.4

EP 1 342 678 B1